# EUROPEAN PATENT APPLICATION

(11) **EP 2 843 752 A1**
(43) Date of publication of application: **04.03.2015**
(21) Application number: 12875429.8
(22) Date of filing: 01.08.2012
(51) Int. Cl.: H01M 12/06

(54) **AIR-METAL CELL AND ELECTROCHEMICAL POWER GENERATION METHOD**

(30) Priority: 25.04.2012 CN 201210125988
(71) Applicant: New Energy Power Sci-tech Co., Ltd., Hong Kong (CN)
(72) Inventor: KROEPLIN, Bernd-Helmut, Filderstadt (DE)
(74) Representative: Elzaburu S.L.P.
(86) International application number: PCT/CN2012/079489
(87) International publication number: WO 2013/159467

(57) **Abstract**

The invention relates to an air-metal-battery composed of plural nested elements and is useful for electrochemical power generation by means of an electrolyte. In order to remarkably improve the ratio of the capacity to the weight, a first interior element (1) is formed by a tube (2) which is made of a perforated, electrolyte-resistant material; in the tube (2), a cavity (3) for an electrolyte (4) is constructed; the tube (2) is exteriorly wrapped with an electric current collector (5) as a first electrode (6); a separator (7) is tightly affixed to the electric current collector (5) exteriorly; and the separator (7) is exteriorly covered by an air electrode (8) serving as a second electrode (9).

## Description

### FIELD OF THE INVENTION

The invention relates to an air-metal-battery composed of plural nested tubular elements and useful for electrochemical power generation by means of an electrolyte, and a method for electrochemical power generation by means of an electrolyte by using the air-metal-battery.

### BACKGROUND OF THE INVENTION

According to DE 10 2009 035 314 B4, a redox-flow-type air-metal-battery containing a liquid electrolyte and a method for generating electric energy by using the redox-flow-type air-metal-battery are disclosed. The battery comprises two tubular elements, a cavity formed between the two tubular elements for an electrolyte in fluid state, and two electrodes disposed on the tubular elements.

Generally, an air-metal cell for power generation is a planar membrane. To the contrary, cylindrical surfaces are used in the redox-flow-type battery tube mentioned above, because thus the mass transfer is facilitated better and the mechanical construction can be simplified. Thereby, advantages in terms of electric efficiency and weight over the planar cells or batteries can be achieved, in particular, when the cell is to be miniaturized. In this case, the capacity increases more than the weight does.

The task of the invention is to achieve an air-metal-battery composed of plural nested tubular elements and a method using the air-metal-battery. By means of the battery and the method, the ratio of the capacity to the weight can be remarkably improved.

### SUMMARY OF THE INVENTION

In order to solve the task mentioned above, the invention provides an air-metal-battery composed of plural nested elements and useful for electrochemical power generation by means of an electrolyte, characterized by comprising: a first interior element consisting of a tube, which is made of a perforated, electrolyte-resistant material; a cavity for the electrolyte, which is formed in the tube; an electric current collector serving as a first electrode, which surrounds the exterior of the tube; a separator tightly affixed to the exterior of the electric current collector; and an air electrode serving as a second electrode, which covers the exterior of the separator.

Furthermore, the invention provides a method for electrochemical power generation by means of an electrolyte by using the air-metal-battery, wherein the metal powders adhering to the metal grid are wetted by injecting the electrolyte into the central interior tube, and by distributing the electrolyte into the dry metal powders outside the interior tube through the openings in the wall of the perforated tube.

The invention relates to a composite system for electrochemical power generation, which is composed of tubes and can be charged by using a reactive metal. The oxygen in the air oxidizes the metal by means of a preferable alkali electrolyte, so as to generate electric current in the air-metal-cell or -battery via an electrochemical route. The oxygen from the air is reduced. Therefore, the OH⁻ ions formed from the oxygen in the air in the alkali environment migrate from a preferable multilayered air electrode, through a perforated separator, and then through an electrolyte such as a caustic potash solution, to a metal electrode equipped with a current collector. The air electrode is composed of a multilayer system, which comprises a hydrophobic outer layer (e.g. a layer made of Teflon), a conductive carbon layer having an extremely large internal surface area, and a current collector layer formed by a conductive metal grid or metal net. Successively in the layer structure is a porous, ion-permeable separator, which electrically separates the air side and the metal side. An oxidizable metal or an oxidizable metal compound such as a boride, which is present in the form of ultrafine metal powders or ultrafine metal dusts, is provided at the metal side. Herein, the term "oxidizable" particularly refers to the "cold combustion" process. As the oxidizable metal or metal compound, particularly, zinc, lithium and boron, or, titanium boride and vanadium boride, are used. The metal electrode comprises a current collector. The current collector forms the both electrodes of the reactor or the battery. The whole composite structure is soaked with the electrolyte. The hydrophobic outer layer of the air electrode should be as thin as possible, namely, preferably has a thickness of 0.01 mm to 0.2 mm, particularly preferably a thickness of 0.08 mm. The separator is preferably a perforated tube, on which plural small pores for the penetration of the electrolyte are disposed. Herein, the diameter of the pores ranges preferably from 0.1 cm to 0.9 cm, and particularly preferably is 0.5 cm.

Due to the combination of the perforated tube having a cavity forming therein and the separator according to the invention, mass transfer is facilitated better, and the mechanical construction is simplified. Thereby, advantages in terms of electric efficiency and weight are achieved, especially over the planar batteries as well as the tubular battery known in the art, in particular, when the battery is to be miniaturized. In this case, the capacity increases remarkably more than the weight does.

In view of function, the air-metal-battery according to the invention is composed of a cylindrical air electrode and a metal electrode, which are separated by a porous separator, and between which an ionic electric current flows through an electrolyte, in particular, an alkali electrolyte, such as caustic potash solution. The efficiency thereof depends on the members taking part in determination of the ion flow, and the structure. The collected electricity is integrated in the metal electrode and the air electrode. Herein, in order to charge the battery, the electrolyte is injected, or pumped through the tube into the perforated, electrolyte-resistant interior tube made of carbon or a polymer. The tube forms the cavity for the electrolyte, and ensures the capability of being charged at any moment. The tube is surrounded by an electric current collector formed by a wire or a metal grid. Metal powders or metal dusts are applied in the grid by water or another appropriate fluid. A separator is concentrically affixed around the metal powders or dusts, and the exterior thereof is covered by an air electrode. The composite structure is firmly pressed together.

For the invention, the introduction and conduction of the electrolyte is especially important. The electrolyte is filled in the interior cavity, and wets the metal powders prepared for the oxidation or the metal dusts prepared for the oxidation through the openings in the wall of the perforated interior tube, wherein the metal powders or metal dusts deposit around the central interior tube. Thereby, reaction occurs very efficiently on very short routes. In particular, the metallic layer, which is introduced outside the central interior tube as dry metal powders or metal dusts, brings the advantages according to the invention. Hence, it is possible to store the battery for an arbitrary length of time, and load the electrolyte until needed. Therefore, the self-discharge process is reduced to minimum.

In another embodiment of the invention, the interior tube is made of carbon or a polymer. The electric current collector of the first electrode is formed by a metal grid, into which the metal powders or metal dusts are applied by a fluid, in particular, by water.

In further another embodiment of the invention, the cylindrical surface of the central perforated tube is formed by a wire made of copper or gold, which is conductive and wound in a spiral shape. Herein, the cylindrical surface of the central perforated tube is formed by a net, which is formed by a foil of copper or another conductive metal (in particular, by an etching process). The net has a thickness from 0.01 mm to 0.05 mm.

Finally, the composite structure consisting of the tube, the current collector, the separator and the air electrode is concentrically nested and pressed together tightly.

The wetting of the metal powders or metal dusts is achieved by injecting the electrolyte into the central interior tube, and by distributing the electrolyte into the dry metal powders outside the tube through the openings in the wall of the perforated tube. The number and size of the pores or openings in the perforated tube is allocated in a manner such that the metal powders are directly and fully wetted.

The cylindrical surface of the central interior tube is formed by a wire made of copper or gold, which is conductive and wound in a spiral shape around the central punched tube. A cylindrical surface having a thickness of 0.01 mm - 0.05 mm can also formed by using a net, which is obtained by etching a foil made of copper or another conductive metal, instead of the wire.

The deposition of the metal powders of the metal electrode is achieved by incorporation with water or another appropriate fluid and application in the current collector.

The set up of the paper-thin porous separator is achieved by wrapping the core, which is composed of the interior tube serving as the central tube, the current collector and the metal powders.

At last, the following process is performed: wrapping the tube composed of the central tube, the current collector, the metal powders or metal dusts and the separator with a planar air electrode; sealing them with an adhesive; and winding the packet with an elastic thread, preferably an elastic thread made of Kevlar or polyethylene, to firmly affix the layers to each other.

### BRIEF DESCRIPTION OF THE DRAWINGS

The invention is described in more detail now by means of an example of the air-metal-battery according to the invention. In which,

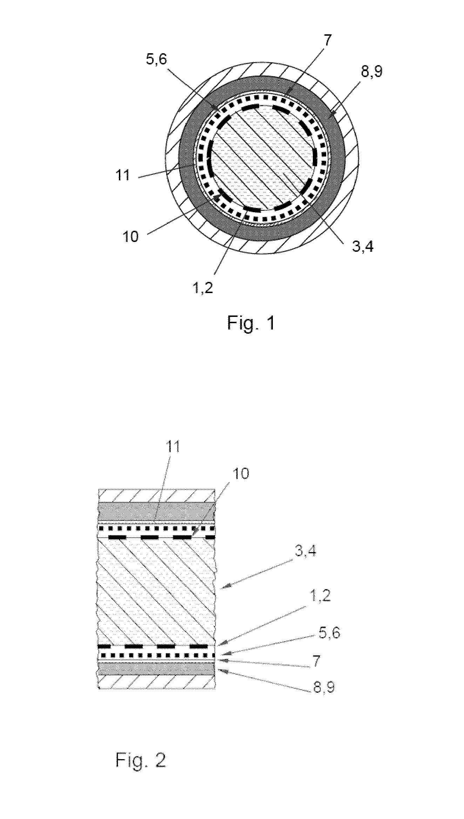

Fig. 1 shows the cross-section of the air-metal-battery, and
Fig. 2 shows a part of the axial section of the air-metal-battery shown in Fig. 1.

### DETAILED DESCRIPTION OF THE INVENTION

The air-metal-battery is composed of plural nested elements and used for electrochemical power generation by means of an electrolyte 4. Herein, a first interior element 1 is formed by a tube 2 made of a perforated, electrolyte-resistant material, in which pores or openings 10 having a diameter from 0.1 cm to 0.9 cm, particularly preferably a diameter of 0.5 cm, are introduced. In the tube 2, a cavity 3 for the electrolyte 4 is constructed. The exterior of the tube 2 is wrapped with a metal electrode 6 with an electric current collector 5, which serves as a first electrode 6. A separator 7 is tightly affixed to the exterior of the metal electrode 6 or the electric current collector 5, and the exterior of the separator 7 is covered by an air electrode 8 serving as a second electrode 9.

The set up of the paper-thin separator 7 is achieved by wrapping the core, which is composed of the interior tube 2 serving as the central tube, the current collector 5 and the metal powders or metal dusts.

The tube 2 is made of carbon or a polymer. The electric current collector 5 serving as the first electrode 6 is formed by a metal grid, into which the metal powders or metal dusts are applied by a fluid, in particular, by water.

The cylindrical surface 11 of the central perforated tube 2 is formed by a wire made of copper or gold, which is conductive and wound in a spiral shape.

The cylindrical surface 11 of the central perforated tube 2 is formed by a net, which is made from a foil of copper or another conductive metal, in particular, by an etching process. The net has a thickness from 0.01 mm to 0.05 mm.

The composite structure consisting of the tube 2, the current collector 5, the separator 7 and the air electrode 8 is concentrically nested and pressed together tightly.

The air electrode 8 is composed of a multilayer system, which comprises a hydrophobic outer layer (e.g. a layer made of Teflon), a conductive carbon layer having an extremely large internal surface area, and a current collector layer formed by a conductive metal grid or a metal net. The hydrophobic outer layer does not absorb water, and preferably has a thickness ranging from 0.01 mm to 0.20 mm, and particularly preferably a thickness of 0.08 mm. In view of structure, the air electrode generally corresponds to the structure of the air electrode adopted in other fuel batteries. Successively inward in the layer structure is a porous, ion-permeable separator 7, which electrically separates the air side and the metal side. Oxidizable metal powders, herein being ultrafine metal dusts, are necessary to the metal side as well as the metal electrode 6 or the current collector 5. Oxidizable metal compounds, for example, metal borides, and boron, can also be used to replace the metal dusts or metal powders. Electrode materials particularly suitable for the metal electrode are zinc, titanium boride, vanadium boride, lithium and boron. The current collectors form the both electrodes of the reactor or the battery. The whole composite structure is soaked with the electrolyte 4. As materials for the current collector or the separator are rarer metals, and particularly preferably noble metals, in order to achieve a better resistance to the undesired oxidation and thereby increase the life of the battery as a whole.

## Claims

1. An air-metal-battery composed of plural nested elements for electrochemical power generation by means of an electrolyte, **characterized in that**:
a) a first interior element (1) is formed by a tube (2), which is made of a perforated, electrolyte-resistant material,
b) in the tube (2), a cavity (3) for an electrolyte (4) is constructed,
c) the exterior of the tube (2) is wrapped with an electric current collector (5) as a metal electrode (6) or a first electrode (6),
d) a separator (7) is tightly affixed to the exterior of the electric current collector (5), and
e) the exterior of the separator (7) is covered by an air electrode (8) as a second electrode (9).

2. The air-metal-battery according to claim 1, **characterized in that** the tube (2) is made of carbon or a polymer.

3. The air-metal-battery according to claim 1 or 2, **characterized in that** the electric current collector (5) as the first electrode (6) is formed by a metal grid, into which metal powders are applied by a fluid, in particular, by water.

4. The air-metal-battery according to any one of claims 1-3, **characterized in that** the cylindrical surface (11) of the central perforated tube (2) is formed by a wire, which is conductive, wound in a spiral shape, and made of copper or gold.

5. The air-metal-battery according to any one of claims 1-3, **characterized in that** the cylindrical surface (11) of the central perforated tube (2) is formed by a net, which is made from a foil of copper or another conductive metal, in particular, by an etching process.

6. The air-metal-battery according to claim 5, **characterized in that** the net has a thickness from 0.01 mm to 0.05 mm.

7. The air-metal-battery according to any one of claims 1-6, **characterized in that** a composite structure consisting of the tube (2), the current collector (5), the separator (7) and the air electrode (8) is concentrically nested and pressed together firmly.

8. A method for electrochemical power generation by means of an electrolyte by using the air-metal-battery according to any one or more of claims 1 to 7, **characterized in that** the metal powders adhering to the metal grid are wetted by injecting the electrolyte into the central interior tube, and by distributing the electrolyte into the dry metal powders outside the interior tube through the openings in the wall of the perforated tube.

9. The method according to claim 8, **characterized in that** the number and size of the openings are allocated in a manner such that the metal powders are directly and fully wetted.

10. The method according to claim 8 or 9, **characterized in that** the metal powders of the metal electrode deposit on the current collector by being wetted and applied with water or another appropriate fluid.
